# EUROPEAN PATENT SPECIFICATION

(11) **EP 3 477 594 B1**
(45) Date of publication and mention of the grant of the patent: **30.12.2020**
(21) Application number: 17198900.7
(22) Date of filing: 27.10.2017
(51) Int. Cl.: G06T 7/254, H04N 5/14, H04N 19/507

(54) **DETECTING MOTION OF A MOVING OBJECT AND TRANSMITTING AN IMAGE OF THE MOVING OBJECT**
ERKENNUNG DER BEWEGUNG EINES SICH BEWEGENDEN OBJEKTS UND ÜBERTRAGEN EINES BILDES DES SICH BEWEGENDEN OBJEKTS
DÉTECTION DU MOUVEMENT D'UN OBJET MOBILE ET TRANSMISSION D'UNE IMAGE DE L'OBJET MOBILE

(43) Date of publication of application: 01.05.2019
(73) Proprietor: Vestel Elektronik Sanayi ve Ticaret A.S., 45030 Manisa (TR)
(72) Inventor: GULSEM, Onur, 45030 Manisa (TR); DOGAN, Can, 45030 Manisa (TR)
(74) Representative: Kehl, Ascherl, Liebhoff & Ettmayr Patentanwälte Partnerschaft mbB

(56) References cited:
- WO-A1-99/45710
- WO-A2-2011/133720
- GB-A- 2 400 911
- US-A1- 2002 044 607
- Nikhil Singh ET AL: "Motion Detection Application Using Web Camera", International Journal of Modern Engineering Research (IJMER), 1 August 2013 (2013-08-01), pages 75-77, XP055446654, Retrieved from the Internet: URL:http://www.ijmer.com/papers/(NCASG)%20 -%202013/16.pdf [retrieved on 2018-01-31]
- Anonymous: "H.120 - Wikipedia", , 13 June 2015 (2015-06-13), XP055446921, Retrieved from the Internet: URL:https://en.wikipedia.org/w/index.php?t itle=H.120&oldid=666716279 [retrieved on 2018-02-01]
- "ITU-T Rec. H.120 (03/93) Codecs for videoconferencing using primary digital group transmission", ITU-T DRAFT ; STUDY PERIOD 2013-2016, INTERNATIONAL TELECOMMUNICATION UNION, GENEVA ; CH, 13 November 2015 (2015-11-13), pages 1-66, XP044140103, [retrieved on 2015-11-13]
- DAVID N HEIN ET AL: "Video Compression Using Conditional Replenishment and Motion Prediction", IEEE TRANSACTIONS ON ELECTROMAGNETIC COMPATIBILITY, IEEE SERVICE CENTER, NEW YORK, NY, US, vol. EMC-10, no. 3, 1 August 1984 (1984-08-01), pages 134-142, XP011165174, ISSN: 0018-9375
- SULLIVAN G J; WIEGAND T: "Rate-distortion optmization for video compression", IEEE SIGNAL PROCESSING MAGAZINE., vol. 15, no. 6, 1 November 1998 (1998-11-01), pages 74-90, XP055480988, US ISSN: 1053-5888, DOI: 10.1109/79.733497
- JEFFERSON HAN ET AL: "CU-SeeMe VR immersive desktop teleconferencing", PROCEEDINGS OF ACM MULTIMEDIA 96. BOSTON, NOV. 18 - 22, 1996; [PROCEEDINGS OF ACM MULTIMEDIA], NEW YORK, ACM, US, 1 February 1997 (1997-02-01), pages 199-207, XP058148624, DOI: 10.1145/244130.244199 ISBN: 978-0-89791-871-8
- MCCANNE S ET AL: "vic: A Flexible Framework for Packet Video", INTERNET CITATION, 1 November 1995 (1995-11-01), XP002371593, Retrieved from the Internet: URL:http://citeseer.ist.psu.edu/cache/pape rs/cs/602/ftp:zSzzSzftp.ee.lbl.govzSzpaper szSzvic-mm95.pdf/mccanne95vic.pdf [retrieved on 1077-11-01]

## Description

The present invention relates to a method of detecting motion of a moving object and transmitting an image of the moving object according to claim 1, a device according to claim 10 and a computer program product or a program code or a system according to claim 13.

### Background of the Invention

Motion detection has numerous applications, such as for opening gates, switching on lights and sensing and/or counting vehicular traffic, as well as in security applications, such as for activating alarms. Particularly in security applications, just detecting the motion of a moving object is often not sufficient, and it is also desirable to transmit an image of the moving object from whichever device has detected the moving object over a network to a content management system (CMS), possibly in association with transmitting a sound recording of the moving object as well.

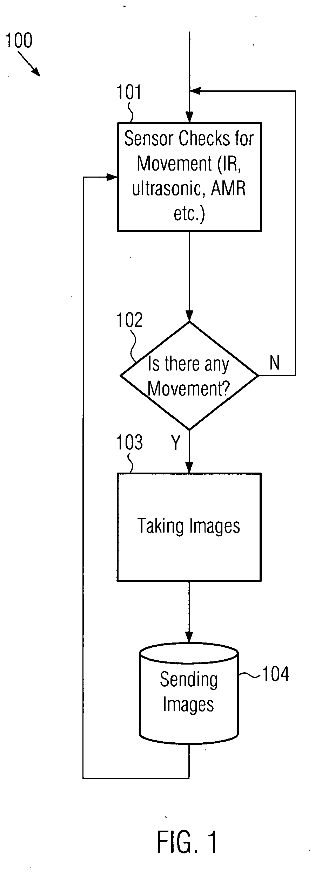

A typical method known in the prior art for detecting the motion of a moving object, capturing an image sequence of the moving object and sending this image sequence over a network to a content management system is shown in Fig. 1. This method 100 comprises using a relatively simple motion sensor, such as an infrared (IR) or ultrasonic sensor or an anisotropic magnetoresistance (AMR) sensor, to check 101 for movement, and if motion is detected 102 by such a sensor, using a more complex camera to capture 103 an image sequence of the moving object, which is then sent 104 to the content management system. The hardware used to carry out this method therefore comprises both a relatively simple motion sensor and a more complex camera.

It would be desirable to reduce the complexity of the hardware required to carry out such a method by using only a single sensing device both to detect the motion of a moving object and to capture an image sequence of the moving object and send this image to the CMS. For example, devices which are capable of both detecting motion and image capture, such as the infrared array sensor Grid-EYE™ of Panasonic Corporation of Japan, are now available. However, such devices may be distributed as nodes in low-power wide area networks (LPWANs) of embedded devices, and such devices generally only have low processing power and are also only powered either by a battery or by energy harvesting, rather than being mains powered, so need to have low power consumption as well. Moreover, LPWANs often also have narrow bandwidths and low data transmission rates, in view of the low power consumption requirements of such embedded devices. This presents a problem in how to detect the motion of a moving object, capture an image sequence of the moving object and send this image to a CMS without using more processing power than the device can supply, too much of the device's limited power supply, and at a data rate which can be accommodated by such a narrow bandwidth data transmission network. It would therefore be desirable to find a way of doing so which would reduce both the amount of power consumed by such a device in carrying out such operations and the amount of data transmitted.

In the prior art, US 5,838,828 describes a way of detecting motion by comparing a frame of a captured image sequence with a reference frame, and calculating a motion vector therefrom using a mean-absolute difference criterion, in order to estimate the displacement of moving objects in a video signal. US 2005/0129311 describes a technique for facial recognition, which compares blocks of a test window of an image with reference data indicative of the presence of an object. "Motion Detection Application using Web Camera" by Nikhil Singh et al., International Journal of Modern Engineering Research, 1 August 2013, pp. 75-77, describes a method of detecting motion according to the pre-characterizing portion of claim 1. The Wikipedia article "H.120", as edited on 13 June 2015, highlights the existence of a video compression standard called "H.120", which uses conditional replenishment. The International Telecommunications Union standard for H.120, "ITU-T H.120 (03/93) Codecs for Videoconferencing using Primary Digital Group Transmission", ITU-T draft , Study Period 2013-2016, 13 November 2015 (XP044140103), contains further details of this conditional replenishment, particularly in Appendix I thereof. Conditional replenishment is also described in the following three documents: Sullivan, G.J. & Wiegand, T.: "Rate-distortion optimization for video compression", IEEE Signal Processing Magazine, Vol. 15, No. 6, 1 November 1998, p. 76 (XP055480988); Jefferson Han et al.: "CU-SeeMe VR immersive desktop teleconferencing", Proceedings of ACM Multimedia 96, Boston, November 18-22, 1996, publ. 1 February 1997, p. 201 (XP058148624); and McCanne, S. et al.: "Vic: A Flexible Framework for Packet Video", ACM Multimedia, November 1995, San Francisco, CA, pp. 7-8 (XP002371593).

### Object of the Invention

It is therefore an object of the invention to provide a method of detecting motion of a moving object and transmitting an image of the moving object, a method of generating an image of a moving object from transmitted data, a device for detecting motion of a moving object and transmitting an image of the moving object, an apparatus for generating an image of a moving object, and a computer program product or a program code or system for executing such methods.

### Description of the Invention

The object of the invention is solved by a method of detecting motion of a moving object and transmitting an image of the moving object according to claim 1. The method at least comprises capturing an image sequence of the moving object comprising a plurality of frames separated from each other by a predetermined period of time, taking a first frame and a second frame from the plurality of frames and detecting whether there is motion in the captured image sequence by calculating a first two-parameter statistical error between the first frame and the second frame, and determining whether the first two-parameter statistical error is greater than a first predetermined threshold value. If motion is detected, the method further comprises extracting a moving part from the captured image sequence by dividing each of the first and second frames into corresponding arrays of windows and calculating a second two-parameter statistical error between each of the windows in the first frame and a corresponding one of the windows in the second frame, selecting a subset of the windows having the highest value or values of the second two-parameter statistical error between the first and second frames as the moving part, supplementing the subset of windows selected as the moving part with one or more other windows from the first and second frames which together with the selected windows constitute a complete rectangle of windows, and transmitting the complete rectangle of windows by transmitting the other windows together with the selected windows. If, on the other hand, motion is not detected, the method instead comprises replacing the first frame by the second frame and the second frame by the next frame in the captured image sequence and detecting whether there is motion in the captured image sequence by comparing the next frame to the second frame in the same manner as just described.

This solution is beneficial because it extracts only whichever part of an image sequence captured by a motion sensing device contains a moving object and transmits this part from the motion sensing device over a network, for example to a content management system, rather than transmitting a whole of the captured image sequence, including the motionless background to the moving object as well, which does not contain any information about the moving object itself. The method therefore transmits less data than prior art methods, which is better suited to low bandwidth transmission networks and consumes less power. Moreover, the way in which the moving part is extracted from the captured image sequence requires less processing power than prior art methods and therefore also and consumes less power as well. Supplementing the subset of windows selected as the moving part with one or more other windows from the first and second frames which together with the selected windows constitute a complete rectangle of windows and transmitting the complete rectangle of windows is beneficial because although it may increase the amount of data to be transmitted by a small amount, it has the advantage of converting what in some cases may be a difficult to interpret mosaic of selected windows into a single, easily recognizable rectangle containing an image of the moving object.

By a two-parameter statistical error is meant a statistical error which takes two parameters as its input.

Advantageous embodiments of the invention may be configured according to any claim and/or part of the following description.

For example, at least one of the first and second two-parameter statistical errors may be the mean absolute error between corresponding parts of the first frame and the second frame. Alternatively or additionally, at least one of the first and second two-parameter statistical errors may be the mean squared error between corresponding parts of the first frame and the second frame.

In one possible embodiment, selecting the subset of the windows as the moving part may comprise selecting the first N windows with the highest values of the second two-parameter statistical error between corresponding parts of the first and second frames as the moving part, wherein N is a predetermined number less than the total number of windows in each frame.

In such a case, the method may further comprise adjusting the total area of the subset of the windows selected as the moving part by adjusting one or both of the value of the predetermined number N and a size of each of the windows, their product N x W being equal to the total area of the subset of the windows.

In an alternative possible embodiment, selecting the subset of the windows as the moving part may instead comprises selecting those windows each of which has a value of the second two-parameter statistical error between corresponding parts of the first and second frames greater than a second predetermined threshold value as the moving part.

In such a case, the method may further comprise adjusting the total area of the subset of the windows selected as the moving part by adjusting one or both of the second predetermined threshold value and a size of each of the windows.

In some embodiments, the method may be part of a method of generating an image of a moving object from transmitted data, wherein the latter further comprises receiving the transmitted windows over a wireless network and combining the received windows with windows containing a motionless background to the moving object received previously and stored in a memory. This solution is beneficial because a content management system may then, for example, receive a motionless background to the moving object just once, and combine this motionless background with the received windows containing a moving part of the captured image sequence in order to reconstitute the whole image sequence, but without a need for the motionless background to be transmitted every time that the moving part of the captured image sequence changes, therefore saving both on the amount of processing and electrical power used prior to transmission of the windows containing the moving part of the captured image sequence and on the quantity of data transmitted and electrical power used during transmission.

Thus, the present invention also relates to a method of generating an image of a moving object from transmitted data, wherein the method at least comprises a method of detecting motion of a moving object and transmitting an image of the moving object as described above. This method of generating an image of a moving object from transmitted data also comprises receiving one or more windows containing a motionless background to the moving object, storing the windows containing the motionless background in a memory, subsequently receiving one or more windows containing a moving part of a captured image sequence of the moving object, which have been created and transmitted using the method of detecting and transmitting the image of the moving object described above, wherein both the windows containing the motionless background and the windows containing the moving part of the captured image sequence are received over a wireless network from a motion sensing device, retrieving the stored windows containing the motionless background from the memory, and combining the windows containing the received moving part of the captured image sequence with the previously received windows containing the motionless background to the moving object. This solution is also beneficial because it saves both on the amount of processing and electrical power used before transmission of the windows containing the moving part of the captured image sequence and on the quantity of data transmitted and electrical power used during their transmission.

The method of generating an image of a moving object from transmitted data may further comprise performing post-reception image processing on the received windows including increasing the resolution of the captured image sequence of the moving object by bilinear interpolation of pixel values.

The present invention further relates to a device for detecting motion of a moving object and transmitting an image of the moving object, wherein the device at least comprises an image captor configured to capture an image sequence of the moving object comprising a plurality of frames separated from each other by a predetermined period of time, a processor configured to detect whether there is motion in the captured image sequence and if motion is detected, to extract a moving part from the captured image sequence by a method as described herein, and a wireless transmitter for transmitting the moving part of the captured image sequence over a network.

Preferably, the device is powered either by a battery or by energy harvesting. This solution is in particular beneficial, because it allows the device to be used as a node in a low-power wide area network of embedded devices.

Moreover, the present invention further relates to an apparatus for generating an image of a moving object from transmitted data, wherein the apparatus at least comprises a device for detecting motion of a moving object and transmitting an image of the moving object as just described, a receiver for firstly receiving one or more windows containing a motionless background to the moving object and subsequently receiving one or more windows containing a moving part of a captured image sequence of the moving object, wherein both the windows containing the motionless background and the windows containing the moving part of the captured image sequence have been transmitted over a wireless network from the device, a processor configured to combine the received windows containing the moving part of the captured image sequence with the previously received windows containing the motionless background to the moving object, and a memory for storing the windows containing the motionless background before reception of the windows containing the moving part of the captured image sequence by the receiver. Such an apparatus may, for example, be or be part of a content management system.

This solution is beneficial because the apparatus may then reconstitute the whole image sequence by combining the motionless background to the moving object with the received windows containing the moving part of the captured image sequence, even though the motionless background may have been received a long time previously and the motion sensing device has subsequently sent only those windows which contain the moving part of the captured image sequence.

In addition, the present invention also relates to a computer program product or a program code or system for executing one or more than one of the herein described methods. Further features, goals and advantages of the present invention will now be described in association with the accompanying drawings, in which exemplary components of the invention are illustrated. Components of the devices and methods according to the invention which are at least essentially equivalent to each other with respect to their function can be marked by the same reference numerals, wherein such components do not have to be marked or described in all of the drawings.

In the following description, the invention is described by way of example only with respect to the accompanying drawings.

### Brief Description of the Drawings

Fig. 1 is a schematic flow diagram of a prior art method of detecting the motion of a moving object and transmitting an image of the moving object;
Fig. 2 is a schematic flow diagram of an embodiment of a method of detecting the motion of a moving object and transmitting an image of the moving object;
Fig. 3A schematically shows an example of a first technique for extracting a moving part from an image, which is not according to the invention;
Fig. 3B schematically shows an example of a second technique for extracting a moving part from an image, which does form part of an embodiment of a method of detecting the motion of a moving object and transmitting an image of the moving object;
Fig. 4A shows a first frame of a first exemplary image sequence;
Fig. 4B shows a second frame of the first exemplary image sequence;
Fig. 5A shows a first frame of a second exemplary image sequence;
Fig. 5B shows a second frame of the second exemplary image sequence;
Fig. 5C shows an example of a window displaying a moving part of the second exemplary image sequence extracted using the first technique described in relation to Fig. 3A, which is not according to the invention;
Fig. 5D shows an example of windows displaying a moving part of the second exemplary image sequence extracted using the second technique described in relation to Fig. 3B, which does form part of an embodiment of a method according to the invention; and
Fig. 5E shows an example of a complete rectangle of windows, including the windows shown in Fig. 5D, constructed from the second exemplary image sequence using the method described in relation to Fig. 2.

### Detailed Description of the Drawings

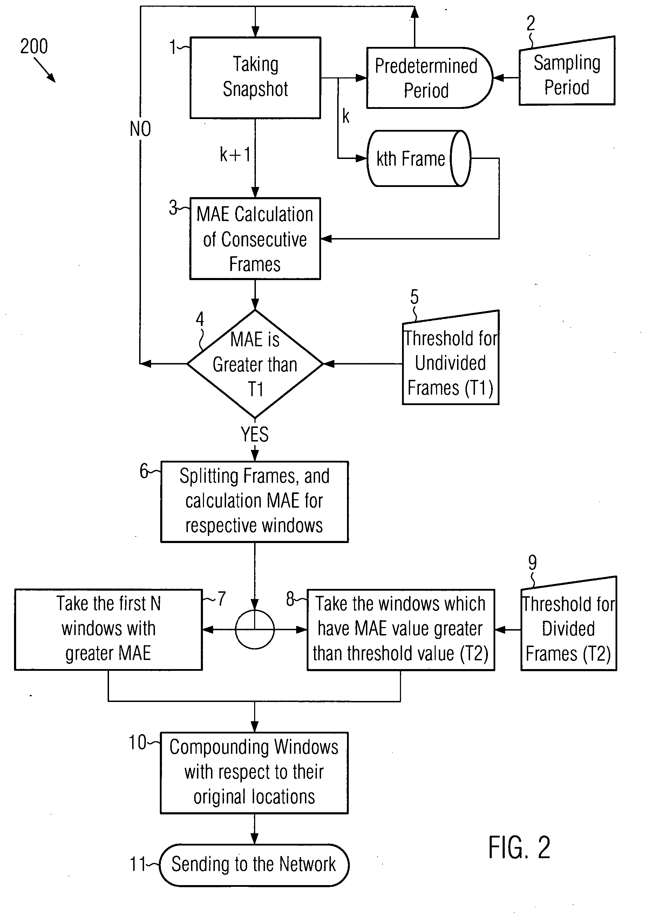

Fig. 2 schematically shows an embodiment of a method 200 of detecting the motion of a moving object and transmitting an image of the moving object. The method 200 firstly comprises capturing 1 an image sequence of the moving object comprising a first or kth frame and a second or (k+1)th frame separated from each other by a predetermined period of time. The first or kth frame can be temporarily stored locally, for example in a working memory, whilst the second or (k+1)th frame is captured. The predetermined period of time can be determined by setting 2 a sampling period, which may be adjusted during set-up of a device to carry out the method 200, in order to suit a particular application and context in which the method 200 is to be used, for example to take account of the effects of changing background levels of natural light due to time of day and local weather conditions.

Each frame of the captured image sequence comprises a plurality of pixels, and the pixels in each frame each have a respective numerical value. For example, if the frames are captured by an 8-bit greyscale camera, the pixels can each take a numerical value of from 0 to 255 (= 2⁸ - 1), inclusive. In other possible examples, the numerical value of each pixel may be determined not just by a level of illuminance, but also by other factors, such as a particular colour in a predefined colour system, such as RGB. Accordingly, each frame of the captured image sequence can be represented by a two-dimensional matrix of numbers, and motion can therefore be detected by comparing the numerical values of the corresponding pixels in the first and second frames with each other.

Accordingly, the method 200 next uses the numerical values of the corresponding pixels in the first and second frames of the captured image sequence to calculate 3 a first two-parameter statistical error between the first or kth frame and the second or (k + 1)th frame. By a two-parameter statistical error is meant a statistical error which takes two parameters as its input. In the present case, therefore, the two parameters are the numerical values of the pixels in the first and second frames which correspond to each other. In the embodiment shown in Fig. 2, the first two-parameter statistical error which is used is the mean absolute error (abbreviated as MAE) between the first frame and the second frame. The MAE is defined as: $MAE = \frac{1}{R ∗ C} {\sum }_{i = 1}^{R} {\sum }_{j = 1}^{C} \left|{F}_{1}\left(i, j\right)-{F}_{2}\left(i, j\right)\right|$ wherein *F*₁ represents the first frame, *F*₂ represents the second frame, *R* represents the number of rows of pixels in each frame, *C* represents the number of columns of pixels in each frame, and *i* and *j* are dummy indices respectively representing the locations of the pixels in each frame along orthogonal *x*- and *y*-axes. However, in an alternative possible embodiment, the first two-parameter statistical error could instead be the mean squared error (abbreviated as MSE) between the first frame and the second frame. The MSE is defined as: $MSE = \frac{1}{R ∗ C} {\sum }_{i = 1}^{R} {\sum }_{j = 1}^{C} \sqrt{{F}_{1}^{2} \left(i, j\right) - {F}_{2}^{2} \left(i, j\right)}$ wherein *F*₁, *F*₂, *R, C, i* and *j* respectively represent the same quantities as before. In either case, purely by way of example, for an image size measuring 960 x 640 pixels, *R* = 640 and *C* = 960. In this example, *i* and *j* can therefore take any value from 1 to 640 inclusive and from 1 to 960 inclusive, respectively. In either case, the calculation 3 of the first two-parameter statistical error generates a numerical output, and the method 200 next determines 4 whether this first two-parameter statistical error is greater than a first predetermined threshold value, T1. The threshold value, T1, can again be adjusted 5 during set-up of a device to carry out the method 200, in order to suit a particular application and context in which the method 200 is to be used. Any value of the first two-parameter statistical error which is greater than the first predetermined threshold value, T1, would indicate that there is motion.

In general, it is desirable to transmit not just the fact that motion has been detected but also an image of the moving object from the motion sensing device which has detected motion of the moving object in the manner described above over a network, for example to a content management system (CMS). However, as also described above, motion sensing devices may be embedded devices with low processing power and which are only powered either by a battery or by energy harvesting, rather than being mains powered, so need to have low power consumption as well. Moreover, networks of embedded devices such as motion sensors typically use low-power wide area networks (LPWANs) for data transmission, which therefore also have a narrow bandwidth and low data transmission rates, in view of the low power consumption requirements of such embedded devices. In order to reduce both the amount of power consumed by such an embedded device and the amount of data transmitted, it would therefore be desirable to extract and transmit only a part of the captured image sequence which contains the moving object.

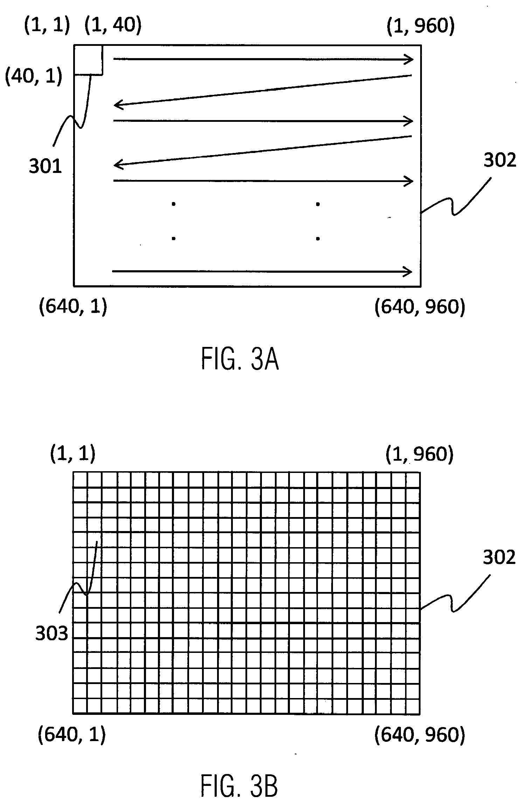

Fig. 3A represents a first technique for extracting a moving part from the captured image sequence, which is not according to the invention. This first technique initially determines the size of a window 301 smaller than the image frame 302 which would be suitable for identifying a moving part of the captured image sequence. The size of this window 301 could be determined, for example, by the expected apparent size of the moving object, as determined by the viewing angle and field of view of the sensing device capturing the image sequence. In general, the window 301 would be a rectangle, but in some cases it may be a square, as in the example shown in Fig. 3A. Purely by way of example, the window 301 could measure 40 x 40 pixels for an image size measuring 960 x 640 pixels. Next, this first technique scans this window 301 of predetermined size pixel by pixel across the image either in a raster pattern, as represented schematically in Fig. 3A, or in a boustrophedon pattern, moving across each row one pixel at a time and down one pixel from one row to the next, calculating a two-parameter statistical error between the first and second frames for each position of the window 301 relative to the frame 302. Taking the same example of a window measuring 40 x 40 pixels and a frame size of 960 x 640 pixels, this would result in the following set of calculations of the two-parameter statistical error between the first and second frames:
*F*₁ (1:40, 1:40) and *F*₂ (1:40, 1:40)
*F*₁ (1:40, 2:41) and *F*₂ (1:40, 2:41)
*F*₁ (1:40, 921:960) and *F*₂ (1:40, 921:960)
*F*₁ (2:41, 1:40) and *F*₂ (2:41, 1:40)
*F*₁ (2:41, 2:41) and *F*₂ (2:41, 2:41)
*F*₁ (601:640, 921:960) and *F*₂ (601:640, 921:960)
wherein (*a*:*b*) denotes an interval from *a* to *b,* including both *a* and *b,* so that (*a*:*b, c:d*) denotes a rectangle of dimensions (*b* - *a* + 1) x (*d* - *c* + 1). If, as in the present example, the window 301 were square with a linear dimension of *W,* this would therefore result in a total number of (*R* - *W* + 1) x (*C- W* + 1) calculations, which in the present example equals (640 - 40 + 1) x (960 - 40 + 1) = 553 521, or over half a million calculations, which would be likely to be an excessive number of calculations for a processor of a simple motion sensing device to be able to cope with.

Instead of using this first technique, therefore, the method 200 described above in relation to Fig. 2 uses a different, second technique for extracting a moving part from the captured image sequence if motion is detected 4 in the comparison which is carried out to the threshold value, T1, as described previously. This different, second technique is schematically represented in Fig. 3B. According to this second technique, a moving part is extracted from the captured image sequence by dividing 6 each of the first and second frames 302 into corresponding arrays of windows 303 and calculating a second two-parameter statistical error between each of the windows 303 in the first frame and a corresponding one of the windows 303 in the second frame. Once again, the second two-parameter statistical error could be the mean absolute error between the first frame and the second frame, as in the embodiment shown in Fig. 2, or it could be the mean squared error.

Next, this second technique for extracting a moving part from the captured image sequence then selects a subset of all the windows 303 in the array which have the highest value or values of the second two-parameter statistical error between the first and second frames as the moving part of the captured image sequence for transmission over a network, for example to a content management system. This selection may be carried out in one of at least two different possible ways, as follows.

In a first possible embodiment, selecting the subset could comprise selecting 7 the first N of the windows 303 which have the highest values of the second two-parameter statistical error between the corresponding parts of the first and second frames as the moving part, wherein N is a predetermined number less than the total number of windows in each frame.

However, in an alternative possible embodiment, selecting the subset could instead comprise selecting 8 those of the windows 303, each of which has a value of the second two-parameter statistical error between corresponding parts of the first and second frames which is greater than a second predetermined threshold value, T2, as the moving part.

In general, in comparison to the first technique for extracting a moving part from the captured image sequence described above in relation to Fig. 3A, either of these two different possible ways of selecting a subset of all the windows 303 in the array which have the highest value or values of the second two-parameter statistical error can result in a plurality of the windows 303 being selected, rather than just the single window 301 which results from the first technique described above in relation to Fig. 3A. The plurality of the selected windows should therefore each have a smaller size than the size of the single window which results from the first technique of Fig. 3A for the technique of Fig. 3B to work well. Taking a concrete example, therefore, for a frame size of 960 x 640 pixels as before, the windows 303 in the array of Fig. 3B could, for example, each measure 5 x 5 pixels, in comparison to the example of 40 x 40 pixels given above for the technique of Fig. 3A. In general, the windows 303 could each be a rectangle, but in some cases they may each be a square, as in the example shown in Fig. 3B, with the additional proviso that for complete coverage of the image frame 302, the respective dimensions of the windows 303 along the orthogonal *x-* and *y*-axes should also be exact divisors of the pixel sizes of the image frame 302 in the same directions. Taking this example, this would result in the following set of calculations of the second two-parameter statistical error between the first and second frames:
*F*₁ (1:5, 1:5) and *F*₂ (1:5, 1:5)
*F*₁ (1:5, 6:10) and *F*₂ (1:5, 6:10)
*F*₁ (1:5, 956:960) and *F*₂ (1:5, 956:960)
*F*₁ (6:10, 1:5) and *F*₂ (6:10, 1:5)
*F*₁ (6:10, 6:10) and *F*₂ (6:10, 6:10)
*F*₁ (636:640, 956:960) and *F*₂ (636:640, 956:960)
wherein, as before, (*a:b*) denotes an interval from *a* to b, including both *a* and *b,* so that (*a:b, c:d)* denotes a rectangle of dimensions (*b* - *a* + 1) x *(d* - *c* + 1). If, as in the present example, the windows 303 were square with a linear dimension of *W,* this would therefore result in a total number of (*R*/*W*) x (*C*/*W*) calculations, which in the present example equals (640/5) x (960/5) = 24 576 calculations, which is approximately 20 times fewer calculations than are required by the technique described above in relation to Fig. 3A, and which a processor of a simple motion sensing device could therefore easily carry out without expending an unreasonable amount of time or electrical energy from a power supply of the device.

The area of the window 301 in the example described above in relation to Fig. 3A is 40 x 40 = 1600 pixels. Therefore, if the expected apparent size of the moving object, as determined, for example, by the viewing angle and field of view of the sensing device capturing the image sequence, remains unchanged, the values either of the predetermined number N or of the second predetermined threshold value, T2, should be chosen 9 such that the subset of the windows 303 which are selected for transmission to the CMS has a similar total area. For the example given of an array of windows 303, each of which measures 5 x 5 pixels, this implies a value of N of, for example, 60, giving a total area for the subset of selected windows equal to 60 x 5 x 5 = 1500 pixels. Whereas this will result in a similar total area, in contrast to the first technique for extracting a moving part from the captured image sequence described above in relation to Fig. 3A, this second technique has the advantage of giving much greater flexibility by adjusting the parameters either of W and/or N or of W and/or T2 to suit a particular application and context in which the method 200 is to be used than the technique of Fig. 3A.

In any case, once the subset of the windows 303 in the array which have the highest value or values of the second two-parameter statistical error have been selected, the method 200 of Fig. 2 then transmits 11 the selected windows to the content management system. Thus the amount of data which is transmitted to the content management system is significantly less than if the entire captured image sequence were to be transmitted, including the motionless background to the moving object, which background, as mentioned before, does not contain any information about the moving object itself. This is advantageous since it allows the data to be transmitted more quickly and using less electrical energy from a power supply of the motion sensing device carrying out the method, thereby allowing the data to be transmitted easily over an LPWAN with narrow bandwidth.

As also represented in the embodiment of the method 200 shown in Fig. 2, prior to transmitting 11 the selected windows to the content management system, the windows selected as the moving part may be supplemented 10 with one or more other of the windows 303 from the first and second frames, which together with the selected windows, constitute a complete rectangle of windows, and the complete rectangle of windows may then be transmitted to the content management system, by transmitting these other windows together with the selected windows. Although this increases the amount of data to be transmitted by a small amount, it has the advantage of converting what in some cases may be a difficult to interpret mosaic of selected windows into a single, easily recognizable window containing an image of the moving object.

Meanwhile, the method 200 continues to capture 1 further frames in the image sequence of the moving object, separated from each other by the predetermined period of time, as determined by the sampling period. Thus, if the method 200 determines 4 that the first two-parameter statistical error between the first frame and the second frame is not greater than the first predetermined threshold value, T1 - in other words, if motion is not detected between the first frame and the second frame - the method 200 takes the next frame in the captured image sequence after the second frame and uses this to replace the second frame (*i.e.* to become the (k + 1)th frame) and also replaces the first frame with the second frame (*i.e.* to become the kth frame) for determining 4 whether the first two-parameter statistical error is greater than the first predetermined threshold value, T1.

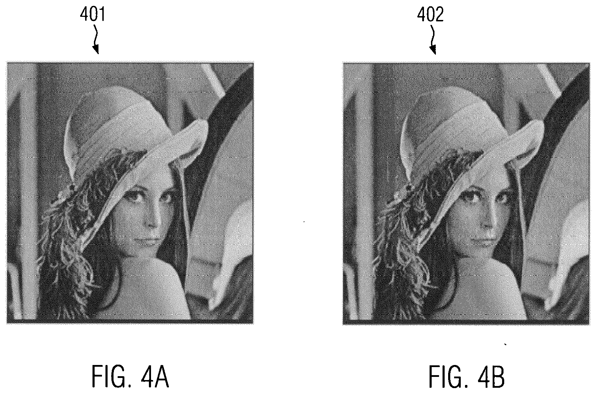

For greater understanding of this and other aspects of the invention, applications of the method of Fig. 2 to some exemplary image sequences will now be described. Figs. 4A and 4B respectively show a first frame 401 and a second frame 402 of a first exemplary image sequence to which the method 200 can be applied. The subject shown in the two frames does not move between the first frame 401 and the second frame 402. The numerical values of all of the pixels in the first frame 401 are therefore the same as the numerical values of the corresponding pixels in the second frame 402. This means that when the first two-parameter statistical error between the first frame 401 and the second frame 402 is calculated 3, the first two-parameter statistical error is found to be zero. Consequently, when it is determined 4 whether the first two-parameter statistical error is greater than the first predetermined threshold value, T1, the first two-parameter statistical error is found not to be greater than the first predetermined threshold value, T1, since even if the first predetermined threshold value, T1, is set equal to zero, the first two-parameter statistical error can, at best, only be equal to T1. The method 200 therefore advances to determining 4 whether the first two-parameter statistical error between the second frame 402 and another frame in the image sequence which has been captured after frame 402 is greater than the first predetermined threshold value, T1.

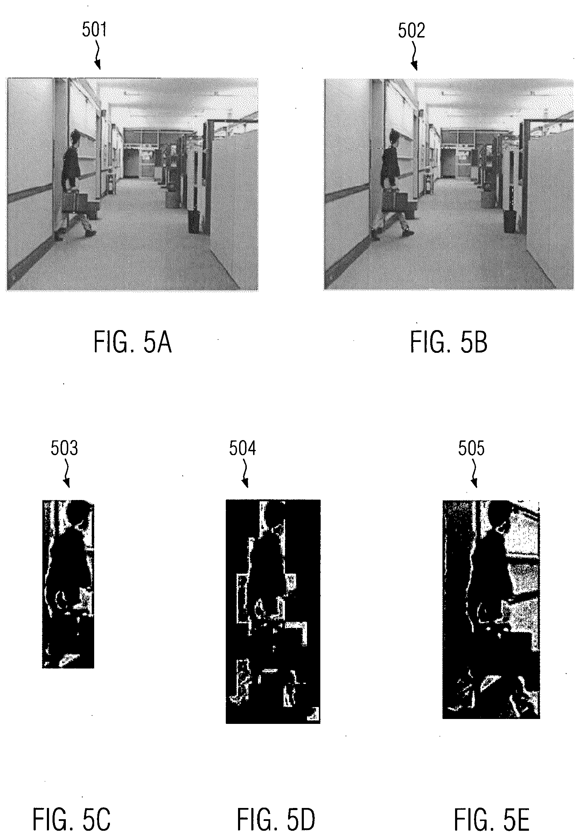

Figs. 5A and 5B respectively show a first frame 501 and a second frame 502 of a second exemplary image sequence to which the method 200 can be applied. In this case, the subject shown in the two frames has moved between the first frame 501 and the second frame 502. The numerical values of at least some of the pixels in the second frame 502 are therefore different from the numerical values of the corresponding pixels in the first frame 501. This means that when the first two-parameter statistical error between the first frame 501 and the second frame 502 is calculated 3, the first two-parameter statistical error is found to be non-zero. If this non-zero value of the first two-parameter statistical error is greater than the value previously chosen 5 for the first predetermined threshold value, T1, when it is determined 4 that the first two-parameter statistical error is greater than the first predetermined threshold value, T1, the method 200 next advances to dividing each of the first and second frames 501, 502 into corresponding arrays of windows and calculating a second two-parameter statistical error between each of the windows in the first frame 501 and a corresponding one of the windows in the second frame 502. The method 200 then selects a subset 504 of the windows which have the highest value or values of the second two-parameter statistical error between the first and second frames as the moving part, as represented in Fig. 5D.

This technique for extracting a moving part from the captured image sequence is in contrast to the technique described above in relation to Fig. 3A, which is not according to the invention and which would instead result in a single window 503 containing some, but not necessarily all, of the moving subject, as is shown in Fig. 5C. Finally, the subset 504 of the windows having the highest value or values of the second two-parameter statistical error may be supplemented by one or more other windows which, together with the selected windows 504, constitute a complete rectangle 505 of windows, as shown in Fig. 5E. This complete rectangle 505 of windows may then be transmitted in its entirety to the content management system. As may be seen by comparing Figs. 5D and 5E on the one hand with Fig. 5C on the other, the technique of the invention has the advantage that by an appropriate choice of the values of W and/or N or of W and/or T2 to suit a particular application and context in which the method 200 is to be used, the whole of the moving object is more likely to be imaged than by using the technique described above in relation to Fig. 3A.

In summary, therefore, the present invention provides a method of detecting motion of a moving object and transmitting an image of the moving object. The method at least comprises capturing an image sequence of the moving object comprising a plurality of frames separated from each other by a predetermined period of time, taking first and second ones of these frames and detecting whether there is motion in the captured image sequence by calculating a first two-parameter statistical error between the two frames, and determining whether the first two-parameter statistical error is greater than a first predetermined threshold value. If motion is detected, the method also comprises extracting a moving part from the captured image sequence by dividing each of the two frames into corresponding arrays of windows and calculating a second two-parameter statistical error between each of the windows in the first frame and a corresponding one of the windows in the second frame, selecting a subset of the windows having the highest value or values of the second two-parameter statistical error between the two frames as the moving part, and transmitting the selected windows over a network. If, on the other hand, motion is not detected, the method instead comprises repeating the same process on the next pair of frames in the captured image sequence. Such a method saves both on the amount of processing and electrical power used before transmission of the windows containing the moving part and on the quantity of data transmitted and electrical power used during transmission. Either or both of the first and second two-parameter statistical errors may, for example, be the mean absolute error (MAE) or the mean squared error (MSE) between corresponding parts of the two frames. Amongst other things, the invention also provides a motion sensing device for carrying out such a method, wherein the device at least comprises an image captor which can be controlled by a processor of the device both to detect motion of a moving object and to capture an image of the moving object, as well as a wireless transmitter for transmitting the captured image over a network.

**Reference Numerals:**

| | | | |
|---|---|---|---|
| 1 | Take snapshot | 101 | Check for movement with sensor |
| 2 | Set sampling period | 102 | Is there any movement? |
| 3 | MAE calculation of consecutive frames | 103 | Take images with camera |
| | | 104 | Send images |
| 4 | Is MAE greater than threshold, T1? | 200 | Embodiment of a method of detecting motion of a moving object and transmitting an image of the moving object |
| 5 | Threshold (T1) for undivided frames | | |
| 6 | Split frames and calculate MAE for respective windows | 301 | Window to scan |
| 7 | Take the first N windows with greatest MAE | 302 | Frame of image |
| | | 303 | Window of array |
| 8 | Take the windows which have MAE value greater than threshold, T2 | 401 | First frame of first exemplary image sequence |
| 9 | Threshold, T2, for divided frames | 402 | Second frame of first exemplary image sequence |
| 10 | Compound windows with respect to their original locations | | |
| | | 501 | First frame of second exemplary |
| 11 | Send to the network | | image sequence |
| 100 | Prior art method of detecting motion of a moving object and transmitting an image of the moving object | 502 | Second frame of second exemplary image sequence |
| | | 503 | Window displaying moving part using a method not according to the invention |
| 504 | Windows displaying moving part according to a first embodiment of the invention | | |
| 505 | Complete rectangle of windows including windows displaying moving part according to a second embodiment of the invention | | |

## Claims

1. A method of detecting motion of a moving object and transmitting an image of the moving object, the method at least comprising:
capturing (1) an image sequence of the moving object comprising a plurality of frames separated from each other by a predetermined period of time;
taking a first frame (k) and a second frame (k + 1) from the plurality of frames and detecting whether there is motion in the captured image sequence by:
calculating (3) a first two-parameter statistical error between the first frame (k) and the second frame (k + 1); and
determining (4) whether the first two-parameter statistical error is greater than a first predetermined threshold value (T1);
if motion is not detected, replacing the first frame by the second frame and the second frame by the next frame in the captured image sequence and detecting whether there is motion in the captured image sequence by comparing the next frame to the second frame in the same manner;
**characterized by**:
whereas if motion is detected, extracting a moving part from the captured image sequence by:
dividing (6) each of the first and second frames into corresponding arrays of windows (303) and calculating a second two-parameter statistical error between each of the windows in the first frame (k) and a corresponding one of the windows in the second frame (k + 1);
selecting (7, 8) a subset (504) of the windows (303) having the highest value or values of the second two-parameter statistical error between the first and second frames as the moving part;
supplementing (10) the subset (504) of windows selected as the moving part with one or more other windows from the first and second frames which together with the selected windows constitute a complete rectangle (505) of windows; and
transmitting (11) the complete rectangle (505) of windows by transmitting the other windows together with the selected windows (504).

2. A method according to claim 1, wherein at least one of the first and second two-parameter statistical errors is the mean absolute error between corresponding parts of the first frame (k) and the second frame (k + 1).

3. A method according to claim 1 or claim 2, wherein at least one of the first and second two-parameter statistical errors is the mean squared error between corresponding parts of the first frame (k) and the second frame (k + 1).

4. A method according to any one of claims 1 to 3, wherein selecting the subset (504) of the windows (303) as the moving part comprises selecting (7) the first N windows with the highest values of the second two-parameter statistical error between corresponding parts of the first and second frames as the moving part, wherein N is a predetermined number less than the total number of windows in each frame.

5. A method according to claim 4, further comprising adjusting the total area of the subset (504) of the windows (303) selected as the moving part by adjusting one or both of the value of the predetermined number N and a size (W) of each of the windows (303), their product N x W being equal to the total area of the subset (504) of the windows (303).

6. A method according to any one of claims 1 to 3, wherein selecting the subset (504) of the windows (303) as the moving part comprises selecting (8) those windows each of which has a value of the second two-parameter statistical error between corresponding parts of the first and second frames greater than a second predetermined threshold value (T2) as the moving part.

7. A method according to claim 6, further comprising adjusting the total area of the subset (504) of the windows (303) selected as the moving part by adjusting one or both of the second predetermined threshold value (T2) and a size (W) of each of the windows (303).

8. A method of generating an image of a moving object from transmitted data, the method at least comprising:
a method of detecting motion of a moving object and transmitting an image of the moving object according to any one of claims 1 to 7;
receiving one or more windows containing a motionless background to the moving object;
storing the windows containing the motionless background in a memory;
subsequently receiving one or more windows containing a moving part of a captured image sequence of the moving object created and transmitted using the method according to any one of claims 1 to 7;
wherein both the windows containing the motionless background and the windows containing the moving part of the captured image sequence are received over a wireless network from a motion sensing device;
retrieving the stored windows containing the motionless background from the memory; and
combining the windows containing the received moving part of the captured image sequence with the previously received windows containing the motionless background to the moving object.

9. A method according to claim 8, further comprising performing post-reception image processing on the received windows including increasing the resolution of the captured image sequence of the moving object by bilinear interpolation of pixel values.

10. A device for detecting motion of a moving object and transmitting an image of the moving object, the device at least comprising:
an image captor configured to capture an image sequence of the moving object comprising a plurality of frames separated from each other by a predetermined period of time;
a processor configured to detect whether there is motion in the captured image sequence and if motion is detected, to extract a moving part from the captured image sequence by a method according to any one of claims 1 to 7; and
a wireless transmitter for transmitting the moving part of the captured image sequence over a network.

11. A device according to claim 10, wherein the device is powered either by a battery or by energy harvesting.

12. An apparatus for generating an image of a moving object from transmitted data, the apparatus at least comprising:
a device for detecting motion of a moving object and transmitting an image of the moving object according to claim 10 or claim 11;
a receiver for firstly receiving one or more windows containing a motionless background to the moving object and subsequently receiving one or more windows containing a moving part of a captured image sequence of the moving object, wherein both the windows containing the motionless background and the windows containing the moving part of the captured image sequence have been transmitted over a wireless network from said device;
a processor configured to combine the received windows containing the moving part of the captured image sequence with the previously received windows containing the motionless background to the moving object; and
a memory for storing the windows containing the motionless background before reception of the windows containing the moving part of the captured image sequence by the receiver.

13. A computer program product or a program code comprising instructions which, when the program is executed by a computer, cause the computer to carry out a method according to any one of claims 1 to 9, or a system comprising means for carrying out a method according to any one of claims 1 to 9.

## Patentansprüche

1. Verfahren zum Erfassen der Bewegung eines sich bewegenden Objekts und Übertragen eines Bildes des sich bewegenden Objekts, wobei das Verfahren zumindest aufweist:
Erfassen (1) einer Bildsequenz des sich bewegenden Objekts, die eine Vielzahl von Bildern aufweist, die durch eine vorbestimmte Zeitperiode voneinander getrennt sind;
Aufnehmen eines ersten Einzelbildes (k) und eines zweiten Einzelbildes (k + 1) aus der Vielzahl von Einzelbildern und Erfassen, ob es in der aufgenommenen Bildsequenz Bewegung gibt, durch:
Berechnen (3) eines ersten statistischen Zwei-Parameter-Fehlers zwischen dem ersten Vollbild (k) und dem zweiten Vollbild (k + 1); und
Bestimmung (4), ob der erste statistische Zwei-Parameter-Fehler größer als ein erster vorbestimmter Schwellenwert (T1) ist;
wenn keine Bewegung erkannt wird, Ersetzen des ersten Einzelbildes durch das zweite Einzelbild und des zweiten Einzelbildes durch das nächste Einzelbild in der eingefangenen Bildsequenz und Erkennen, ob es Bewegung in der eingefangenen Bildsequenz gibt, indem das nächste Einzelbild mit dem zweiten Einzelbild in der gleichen Weise verglichen wird;
**gekennzeichnet durch**:
in der Erwägung, dass, wenn Bewegung erkannt wird, ein sich bewegender Teil aus der aufgenommenen Bildsequenz extrahiert wird **durch**:
Unterteilen (6) sowohl des ersten als auch des zweiten Vollbildes in entsprechende Anordnungen von Fenstern (303) und Berechnen eines zweiten statistischen Zwei-Parameter-Fehlers zwischen jedem der Fenster in dem ersten Vollbild (k) und einem entsprechenden der Fenster in dem zweiten Vollbild (k + 1);
Auswählen (7, 8) einer Untergruppe (504) der Fenster (303) mit dem höchsten Wert oder den höchsten Werten des zweiten statistischen Zweiparameterfehlers zwischen dem ersten und dem zweiten Rahmen als den sich bewegenden Teil;
Ergänzen (10) der Untergruppe (504) der als der sich bewegende Teil ausgewählten Fenster mit einem oder mehreren anderen Fenstern aus dem ersten und zweiten Rahmen, die zusammen mit den ausgewählten Fenstern ein vollständiges Rechteck (505) von Fenstern bilden; und
Übertragung (11) des vollständigen Rechtecks (505) der Fenster **durch** Übertragung der anderen Fenster zusammen mit den ausgewählten Fenstern (504).

2. Verfahren nach Anspruch 1, wobei mindestens einer der ersten und zweiten statistischen Zwei-Parameter-Fehler der mittlere absolute Fehler zwischen entsprechenden Teilen des ersten Rahmens (k) und des zweiten Rahmens (k + 1) ist.

3. Verfahren nach Anspruch 1 oder Anspruch 2, wobei mindestens einer der ersten und zweiten statistischen Zwei-Parameter-Fehler der mittlere quadratische Fehler zwischen entsprechenden Teilen des ersten Rahmens (k) und des zweiten Rahmens (k + 1) ist.

4. Verfahren nach einem der Ansprüche 1 bis 3, wobei das Auswählen der Untergruppe (504) der Fenster (303) als den sich bewegenden Teil das Auswählen (7) der ersten N Fenster mit den höchsten Werten des zweiten statistischen Zwei-Parameter-Fehlers zwischen entsprechenden Teilen des ersten und zweiten Rahmens als den sich bewegenden Teil aufweist, wobei N eine vorbestimmte Zahl kleiner als die Gesamtzahl der Fenster in jedem Rahmen ist.

5. Verfahren nach Anspruch 4, das ferner das Einstellen der Gesamtfläche der Untergruppe (504) der Fenster (303) aufweist, die als der sich bewegende Teil ausgewählt sind, indem der Wert der vorbestimmten Anzahl N oder beide und eine Größe (W) jedes der Fenster (303) eingestellt werden, wobei ihr Produkt N x W gleich der Gesamtfläche der Untergruppe (504) der Fenster (303) ist.

6. Verfahren nach einem der Ansprüche 1 bis 3, wobei das Auswählen der Untergruppe (504) der Fenster (303) als beweglicher Teil das Auswählen (8) derjenigen Fenster als beweglicher Teil aufweist, von denen jedes einen Wert des zweiten statistischen Zwei-Parameter-Fehlers zwischen entsprechenden Teilen des ersten und zweiten Rahmens aufweist, der größer als ein zweiter vorbestimmter Schwellenwert (T2) ist.

7. Verfahren nach Anspruch 6, das ferner das Einstellen der Gesamtfläche der Untergruppe (504) der als beweglicher Teil ausgewählten Fenster (303) durch Einstellen eines oder beider des zweiten vorbestimmten Schwellenwertes (T2) und einer Größe (W) jedes der Fenster (303) aufweist.

8. Ein Verfahren zum Erzeugen eines Bildes eines sich bewegenden Objekts aus übertragenen Daten, wobei das Verfahren zumindest aufweist:
ein Verfahren zum Erfassen der Bewegung eines sich bewegenden Objekts und zum Übertragen eines Bildes des sich bewegenden Objekts nach einem der Ansprüche 1 bis 7;
Empfangen eines oder mehrerer Fenster, die einen bewegungslosen Hintergrund für das sich bewegende Objekt enthalten;
Speichern der Fenster, die den unbewegten Hintergrund enthalten, in einem Speicher;
anschließendes Empfangen eines oder mehrerer Fenster, die einen beweglichen Teil einer aufgenommenen Bildsequenz des sich bewegenden Objekts enthalten, die nach dem Verfahren nach einem der Ansprüche 1 bis 7 erzeugt und übertragen wurde;
wobei sowohl die Fenster, die den unbewegten Hintergrund enthalten, als auch die Fenster, die den sich bewegenden Teil der eingefangenen Bildsequenz enthalten, über ein drahtloses Netzwerk von einer Bewegungserfassungsvorrichtung empfangen werden;
Abrufen der gespeicherten Fenster, die den unbewegten Hintergrund enthalten, aus dem Speicher; und
Kombination der Fenster, die den empfangenen bewegten Teil der aufgenommenen Bildsequenz enthalten, mit den zuvor empfangenen Fenstern, die den unbewegten Hintergrund des sich bewegenden Objekts enthalten.

9. Verfahren nach Anspruch 8, das weiterhin die Durchführung einer Nach-Empfangs-Bildverarbeitung an den empfangenen Fenstern aufweist, einschließlich der Erhöhung der Auflösung der aufgenommenen Bildsequenz des sich bewegenden Objekts durch bilineare Interpolation von Pixelwerten.

10. Vorrichtung zum Erfassen der Bewegung eines sich bewegenden Objekts und zum Übertragen eines Bildes des sich bewegenden Objekts, wobei die Vorrichtung zumindest aufweist:
einen Bildaufnehmer, der so konfiguriert ist, dass er eine Bildsequenz des sich bewegenden Objekts einfängt, die eine Vielzahl von Bildern aufweist, die durch eine vorbestimmte Zeitperiode voneinander getrennt sind;
einen Prozessor, der so konfiguriert ist, dass er erkennt, ob es in der erfassten Bildsequenz Bewegung gibt, und wenn Bewegung erkannt wird, einen sich bewegenden Teil aus der erfassten Bildsequenz durch ein Verfahren nach einem der Ansprüche 1 bis 7 extrahiert; und
einem drahtlosen Sender zur Übertragung des beweglichen Teils der aufgenommenen Bildsequenz über ein Netzwerk.

11. Vorrichtung nach Anspruch 10, wobei die Vorrichtung entweder durch eine Batterie oder durch Energieernte gespeist wird.

12. Vorrichtung zum Erzeugen eines Bildes eines sich bewegenden Objekts aus übertragenen Daten, wobei die Vorrichtung zumindest aufweist:
eine Vorrichtung zum Erfassen der Bewegung eines sich bewegenden Objekts und zum Übertragen eines Bildes des sich bewegenden Objekts nach Anspruch 10 oder Anspruch 11;
einen Empfänger zum ersten Empfangen von einem oder mehreren Fenstern, die einen unbewegten Hintergrund des sich bewegenden Objekts enthalten, und zum anschließenden Empfangen von einem oder mehreren Fenstern, die einen sich bewegenden Teil einer eingefangenen Bildsequenz des sich bewegenden Objekts enthalten, wobei sowohl die Fenster, die den unbewegten Hintergrund enthalten, als auch die Fenster, die den sich bewegenden Teil der eingefangenen Bildsequenz enthalten, über ein drahtloses Netzwerk von der Vorrichtung übertragen worden sind;
einen Prozessor, der so konfiguriert ist, dass er die empfangenen Fenster, die den sich bewegenden Teil der eingefangenen Bildsequenz enthalten, mit den zuvor empfangenen Fenstern, die den unbewegten Hintergrund des sich bewegenden Objekts enthalten, kombiniert; und
einen Speicher zum Speichern der Fenster, die den unbewegten Hintergrund enthalten, vor dem Empfang der Fenster, die den beweglichen Teil der aufgenommenen Bildsequenz enthalten, durch den Empfänger.

13. Computerprogrammprodukt oder Programmcode mit Befehlen, die, wenn das Programm von einem Computer ausgeführt wird, den Computer veranlassen, ein Verfahren nach einem der Ansprüche 1 bis 9 durchzuführen, oder System, das Mittel zur Durchführung eines Verfahrens nach einem der Ansprüche 1 bis 9 aufweist.

## Revendications

1. Une méthode de détection du mouvement d'un objet en mouvement et de transmission d'une image de l'objet en mouvement, la méthode comprenant au moins :
la capture (1) d'une séquence d'images de l'objet en mouvement comprenant une pluralité d'images séparées les unes des autres par une période de temps prédéterminée ;
prendre une première image (k) et une seconde image (k + 1) parmi la pluralité d'images et détecter s'il y a un mouvement dans la séquence d'images capturées en :
calcul (3) d'une première erreur statistique à deux paramètres entre la première image (k) et la seconde image (k + 1) ; et
déterminer (4) si la première erreur statistique à deux paramètres est supérieure à une première valeur seuil prédéterminée (T1) ;
si aucun mouvement n'est détecté, remplacer la première image par la seconde et la seconde par l'image suivante dans la séquence d'images capturées et détecter s'il y a un mouvement dans la séquence d'images capturées en comparant l'image suivante à la seconde de la même manière ;
**caractérisé par** :
tandis que si un mouvement est détecté, l'extraction d'une partie mobile de la séquence d'images capturées par
divisant (6) chacune des première et deuxième trames en réseaux de fenêtres correspondants (303) et en calculant une deuxième erreur statistique à deux paramètres entre chacune des fenêtres de la première trame (k) et une fenêtre correspondante des fenêtres de la deuxième trame (k + 1) ;
sélectionner (7, 8) un sous-ensemble (504) des fenêtres (303) ayant la ou les valeurs les plus élevées de la deuxième erreur statistique à deux paramètres entre les première et deuxième trames comme partie mobile ;
compléter (10) le sous-ensemble (504) des fenêtres sélectionnées comme partie mobile par une ou plusieurs autres fenêtres des premier et deuxième cadres qui, avec les fenêtres sélectionnées, constituent un rectangle complet (505) de fenêtres ; et
en transmettant (11) le rectangle complet (505) de fenêtres en transmettant les autres fenêtres avec les fenêtres sélectionnées (504).

2. Méthode selon la revendication 1, dans laquelle au moins une des première et deuxième erreurs statistiques à deux paramètres est l'erreur absolue moyenne entre les parties correspondantes de la première trame (k) et de la deuxième trame (k + 1).

3. Méthode selon la revendication 1 ou la revendication 2, dans laquelle au moins une des première et deuxième erreurs statistiques à deux paramètres est l'erreur quadratique moyenne entre les parties correspondantes de la première trame (k) et de la deuxième trame (k + 1).

4. Méthode selon l'une quelconque des revendications 1 à 3, dans laquelle la sélection du sous-ensemble (504) des fenêtres (303) comme partie mobile comprend la sélection (7) des N premières fenêtres ayant les valeurs les plus élevées de la deuxième erreur statistique à deux paramètres entre les parties correspondantes des premier et deuxième cadres comme partie mobile, où N est un nombre prédéterminé inférieur au nombre total de fenêtres dans chaque cadre.

5. Méthode selon la revendication 4, comprenant en outre l'ajustement de la surface totale du sous-ensemble (504) des fenêtres (303) sélectionnées comme partie mobile en ajustant l'une ou les deux valeurs du nombre prédéterminé N et une taille (W) de chacune des fenêtres (303), leur produit N x W étant égal à la surface totale du sous-ensemble (504) des fenêtres (303).

6. Méthode selon l'une quelconque des revendications 1 à 3, dans laquelle la sélection du sous-ensemble (504) des fenêtres (303) comme partie mobile comprend la sélection (8) des fenêtres dont chacune a une valeur de la deuxième erreur statistique à deux paramètres entre les parties correspondantes des premier et deuxième cadres supérieure à une deuxième valeur de seuil prédéterminée (T2) comme partie mobile.

7. Méthode selon la revendication 6, comprenant en outre l'ajustement de la surface totale du sous-ensemble (504) des fenêtres (303) sélectionnées comme partie mobile en ajustant une ou les deux de la deuxième valeur de seuil prédéterminée (T2) et une taille (W) de chacune des fenêtres (303).

8. Une méthode de génération d'une image d'un objet en mouvement à partir de données transmises, la méthode comprenant au moins :
une méthode de détection du mouvement d'un objet mobile et de transmission d'une image de l'objet mobile selon l'une quelconque des revendications 1 à 7 ;
la réception d'une ou plusieurs fenêtres contenant un arrière-plan immobile de l'objet en mouvement ;
le stockage des fenêtres contenant l'arrière-plan immobile dans une mémoire ;
recevoir ensuite une ou plusieurs fenêtres contenant une partie mobile d'une séquence d'images capturées de l'objet en mouvement, créées et transmises selon la méthode correspondant à l'une quelconque des revendications 1 à 7 ;
dans lequel les fenêtres contenant l'arrière-plan immobile et les fenêtres contenant la partie mobile de la séquence d'images capturées sont toutes deux reçues sur un réseau sans fil à partir d'un dispositif de détection de mouvement ;
la récupération des fenêtres stockées contenant l'arrière-plan immobile à partir de la mémoire ; et
en combinant les fenêtres contenant la partie mobile reçue de la séquence d'images capturées avec les fenêtres précédemment reçues contenant l'arrière-plan immobile de l'objet en mouvement.

9. Méthode selon la revendication 8, comprenant en outre l'exécution d'un traitement d'image post-réception sur les fenêtres reçues, y compris l'augmentation de la résolution de la séquence d'images capturées de l'objet mobile par interpolation bilinéaire des valeurs de pixels.

10. Dispositif pour détecter le mouvement d'un objet mobile et transmettre une image de l'objet mobile, le dispositif comprenant au moins :
un capteur d'images configuré pour capturer une séquence d'images de l'objet en mouvement comprenant une pluralité d'images séparées les unes des autres par une période de temps prédéterminée ;
un processeur configuré pour détecter s'il y a un mouvement dans la séquence d'images capturée et, si un mouvement est détecté, pour extraire une partie mobile de la séquence d'images capturée par une méthode selon l'une quelconque des revendications 1 à 7 ; et
un émetteur sans fil pour transmettre la partie mobile de la séquence d'images capturées sur un réseau.

11. Dispositif selon la revendication 10, dans lequel le dispositif est alimenté soit par une batterie, soit par la collecte d'énergie.

12. Un appareil pour générer une image d'un objet en mouvement à partir de données transmises, l'appareil comprenant au moins :
un dispositif pour détecter le mouvement d'un objet mobile et transmettre une image de l'objet mobile selon la revendication 10 ou la revendication 11 ;
un récepteur pour recevoir tout d'abord une ou plusieurs fenêtres contenant un arrière-plan immobile de l'objet mobile et pour recevoir ensuite une ou plusieurs fenêtres contenant une partie mobile d'une séquence d'images capturées de l'objet mobile, dans lequel à la fois les fenêtres contenant l'arrière-plan immobile et les fenêtres contenant la partie mobile de la séquence d'images capturées ont été transmises sur un réseau sans fil à partir dudit dispositif ;
un processeur configuré pour combiner les fenêtres reçues contenant la partie mobile de la séquence d'images capturées avec les fenêtres précédemment reçues contenant l'arrière-plan immobile de l'objet mobile ; et
une mémoire pour stocker les fenêtres contenant le fond immobile avant la réception des fenêtres contenant la partie mobile de la séquence d'images capturées par le récepteur.

13. Un produit de programme informatique ou un code de programme comprenant des instructions qui, lorsque le programme est exécuté par un ordinateur, font en sorte que l'ordinateur exécute une méthode selon l'une quelconque des revendications 1 à 9, ou un système comprenant des moyens pour exécuter une méthode selon l'une quelconque des revendications 1 à 9.
